(19) Europäisches Patentamt
European Patent Office
Office européen des brevets

(11) EP 4 636 033 A1

# (12) EUROPEAN PATENT APPLICATION

(43) Date of publication:
**22.10.2025 Bulletin 2025/43**

(21) Application number: **24170328.9**

(22) Date of filing: **15.04.2024**

(51) International Patent Classification (IPC):
***C08L 63/00*** *(2006.01)* ***C09J 163/00*** *(2006.01)*

(52) Cooperative Patent Classification (CPC):
**C08L 63/00; C09J 163/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sika Technology AG**
**6340 Baar (CH)**

(72) Inventors:
- **GABERELL, Fabio**
  **6003 Luzern (CH)**
- **KRÜGER, Christian**
  **8919 Rottenschwil (CH)**
- **LEMPEREUR, Juliette**
  **8953 Dietikon (CH)**
- **MORAES, Higor Elias**
  **06864-190 Itapecerica da Serra (BR)**
- **CAKIC, Goran**
  **8037 Zürich (CH)**
- **HALTINER, Sara**
  **8952 Schlieren (CH)**

(74) Representative: **Sika Patent Attorneys**
**C/o Sika Technology AG**
**Corp. IP Dept.**
**Tüffenwies 16**
**8048 Zürich (CH)**

## (54) HEAT-CURING EPOXY RESIN COMPOSITIONS WITH IMPROVED IMPACT PEEL VALUES

(57) The invention relates to a thermosetting one-component epoxy resin composition comprising at least one epoxy resin, at least one latent curing agent for epoxy resins, preferably at least one toughness improver and thermoplastic particles **TP** with an average particle size $D_{50}$ between 5 - 400 μm, determined by laser diffractometry, and a polar component of the surface free energy of more than 2 mN/m determined with the Washburn method. These thermosetting one-component epoxy resin compositions display improved mechanical properties, especially tensile strength and E-modulus, as well as high impact peel values and provide good storage stability, especially at elevated temperatures.

EP 4 636 033 A1

## Description

### Technical field

The invention relates to the field of thermosetting one-component epoxy resin compositions, especially for use as bodywork adhesive.

### Prior art

Thermosetting, one-component epoxy resin adhesives have already been used for some considerable time as adhesives in body construction. One important field of use of one-component thermosetting epoxy resin adhesives, accordingly, is in vehicle construction, where typically there are metal substrates such as steel sheets and aluminium present, particularly in the context of adhesive bonding. Following the application of the epoxy resin composition, the bodywork is heated in the CEC (cathodic electrocoating) oven, by means of which the thermosetting epoxy resin composition as well is cured. Good mechanical properties, especially tensile strength and E-modulus, as well as high impact peel values are required in the context of adhesive bonding.

### Summary of the invention

It is therefore an object of the present invention to provide thermosetting one-component epoxy resin compositions with improved mechanical properties, especially tensile strength and E-modulus, as well as high impact peel values and preferably provide good storage stability, especially at elevated temperatures.
This object was surprisingly achieved by a thermosetting one-component epoxy resin composition according to claim 1. Said epoxy resin composition have particularly good usability as a one-component thermosetting adhesive, especially as a thermosetting one-component bodywork adhesive in motor vehicle construction.

### Ways of executing the invention

In a first aspect of the invention, the invention is related to a thermosetting one-component epoxy resin composition comprising:

a) at least one epoxy resin **A** having an average of more than one epoxy group per molecule, preferably 10 - 60 % by weight, more preferably 30 - 60 % by weight, most preferably 40 - 45 % by weight, based on the total weight of the thermosetting one-component epoxy resin composition;
b) at least one latent curing agent **B** for epoxy resins, preferably the latent curing agent **B** is selected from the group consisting of aromatic dicarboxylic dihydrazide **B1**, aliphatic dicarboxylic dihydrazide **B2** and dicyandiamide **B3**;
c) preferably at least one toughness improver **D**, preferably at least one terminally blocked polyurethane polymer **D1**; and
d) thermoplastic particles **TP** with an average particle size $D_{50}$ between 5 - 400 μm, preferably between 7.5 - 150 μm, more preferably between 10 - 100 μm, determined by laser diffractometry, more preferably by using a Sympatec HELOS machine and dry dispersion in air stream (RODOS) and a polar component of the surface free energy of more than 2 mN/m determined with the Washburn method as described below.

In this document, the use of the term "independently" in connection with substituents, radicals or groups should be interpreted such that the substituents, radicals or groups having the same designation in the same molecule may occur simultaneously with different meanings.
The prefix "poly" in substance names such as "polyol", "polyisocyanate", "polyether" or "polyamine" in the present document indicates that the respective substance, in a formal sense, contains more than one of the functional groups that occur in its name per molecule.
In the present document, "molecular weight" is understood to mean the molar mass (in grams per mole) of a molecule. "Average molecular weight" is understood to mean the number-average molecular weight $M_n$ of an oligomeric or polymeric mixture of molecules, which is typically determined by means of GPC against polystyrene as standard unless indicted otherwise.
A "primary hydroxyl group" refers to an OH group bonded to a carbon atom having two hydrogens.
In the present document, the term "primary amino group" refers to an $NH_2$ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The thermosetting one-component epoxy resin composition comprises d) thermoplastic particles **TP** with an average particle size $D_{50}$ between 5 - 400 $\mu$m, preferably between 7.5 - 150 $\mu$m, more preferably between 10 - 100 $\mu$m, determined by laser diffractometry. More preferably, the average particle size $D_{50}$ is determined by using a Sympatec HELOS machine and dry dispersion in air stream (RODOS). Most preferably, the average particle size $D_{50}$ is determined as described in the experimental section.

The thermoplastic particles **TP** have a polar component of the surface free energy of more than 2 mN/m determined with the Washburn method.

Surprisingly it was found that thermoplastic particles **TP** with a surface free energy of more than 2 mN/m lead to higher mechanical properties, especially E-modulus and tensile strength, compared to compositions containing toughness improver, preferably terminally blocked polyurethane polymers. Thermoplastic particles **TP** with a surface free energy of less than 2 mN/m showed significantly lower values. Especially surprising, it was further found that thermoplastic particles **TP** with a surface free energy of more than 2 mN/m, in contrast to particles with a surface free energy of less than 2 mN/m, lead to high impact peel values. This can be seen, for example, in table 2 in the comparison of Ref.1 and Ref.2 with E1 to E4 or in the comparison of Ref.3 and Ref.4 with E5 to E8.

It is especially preferred if the thermoplastic particles **TP** have a polar component of the surface free energy of more than 3 mN/m, preferably more than 4.5 mN/m, most preferably more than 5.5 mN/m, determined with the Washburn. This is advantageous with respect to high impact peel values. This can be seen, for example, in table 2 in the comparison of Ref.2 with E1 and E2, E1 with E2, Ref.4 with E5 and E6 and E5 with E6. It is also shown in table 4 in the comparison of E9-E11 with E12-E14 and with E15-E17. It is further shown in table 6 in the comparison of E18-E19 with E20-E21.

It is further preferred if in the thermoplastic particles **TP**, the polar component of the surface free energy amounts to more than 10 %, preferably more than 15 %, preferably more than 22.5 %, of the total surface free energy, wherein the total surface free energy is the sum of the polar component and the disperse component of the surface free energy. Said surface free energy is determined with the Washburn method. This is advantageous with respect to high impact peel values as well. This can be seen, for example, in table 2 in the comparison of Ref.2 with E1 and E2, E1 with E2, Ref.4 with E5 and E6 and E5 with E6. It is also shown in table 4 in the comparison of E9-E11 with E12-E14 and with E15-E17. It is further shown in table 6 in the comparison of E18-E19 with E20-E21.

In the present invention, the Washburn method was performed in the following way: In a Washburn measurement a glass tube with a filter base filled with powder (in this case particles) comes into contact with a test liquid. The liquid is drawn up as a result of capillary action. The increase in mass of the tube, which is suspended from a force sensor, is determined with respect to time during the measurement. If the bulk powder is looked upon as a bundle of capillaries, then the process can be described by the Washburn equation:

$$\frac{m^2}{t} = \frac{c \cdot \rho^2 \cdot \sigma \cdot \cos\theta}{\eta}$$

Where: m $\rightarrow$ mass of the liquid; t $\rightarrow$ flow time (sorption time); $\sigma \rightarrow$ surface tension of the liquid; c $\rightarrow$ capillary constant of the powder; $\rho \rightarrow$ density of the liquid; $\theta \rightarrow$ contact angle; $\eta \rightarrow$ viscosity of the liquid.

The capillary constant c includes the number of micro-capillaries and their mean radius and depends on the nature of the powder and also on that of the measuring tube. The used measuring tube was made of glass with an inner diameter of 10 $\pm$ 0.2 mm, a total length of 50 mm and a maximum filling length of 30 mm. According to Washburn equation the constant c of the powder must be known, therefor it has to be determined experimentally. To determine the constant c, a measurement is carried out with an optimally wetting (spreading) liquid (in our case n-heptane) where the contact angle $\theta$ is considered to be 0° ($\cos\theta$ = 1). The value of c is substituted into the equation to determine the contact angle $\theta$ using water and diiodomethane as test liquids. The contact angle measured in this way is an advancing angle. Under these circumstances, the density $\rho$ and viscosity $\eta$ of liquids were considered for the temperature 23°C.

The preparation of the powders in the Washburn cell was carried out according to a strict protocol. A certain amount of powder was compressed in the cell using the gravitational effect of 1 kg weight on top of the cell for a time interval of three minutes. Thereafter, the weight was carefully removed from the cell and the cell transferred to a tensiometer for Washburn measurements. In order to keep the height of the powder in the cell almost constant after tapping, about 740 - 810 mg of powder were weighed using a microbalance. The corresponding amount of powder resulted at the end of compaction on the powder column of approx. 18 to 22 mm for all types of powder.

The glass cylinder was connected to an electronic balance and weight data versus time were recorded with a frequency of 25 Hz as the imbibition proceeded. The data acquisition started when the cylinder entered in contact with the testing liquid. The front of the liquid should rise uniformly through a porous sample causing a weight increase (avoid air bubbles at the interface liquid/cylinder). These measurements were run on a Kruss Modular Tensiometer K100 MK3. To

achieve reproducibility of sorption measurements the following conditions were strived for:

- All measurements were run at a constant temperature of 23 °C.
- The temperature and the relative humidity of air near the cylinder in the tensiometer device are controlled, 23 °C and relative humidity of 50 %.
- The total quantity of solid particles was maintained at approx. 18-22 mm packaging height.

The thermoplastic particles **TP** are preferably selected form the list consisting of polyolefin particles, preferably polyethylene particles, polypropylene particles; polybutene particles, polymethylpentene particles and ethylene copolymer particles; polyethylene terephthalate particles; polybutylene terephthalate particles; polycarbonate particles and polyphenylene sulfide particles, preferably polyolefin particles, more preferably polyethylene particles.

Preferred polyethylene particles are selected form the list consisting of UHMWPE (ultra high molecular weight polyethylene) particles, HMWPE (high molecularweight polyethylene) particles, HDPE (high density polyethylene) particles, MDPE (medium density polyethylene) particles and LDPE (low density polyethylene) particles.

Especially preferred thermoplastic particles **TP** are UHMWPE (ultra high molecular weight polyethylene) particles, preferably having a viscosity average molecular weight $M_v$ ranging from 1 to 11 million g/mol, preferably 3 to 10.5 million g/mol, yet more preferably from 3 to 7 million g/mol, whereby the viscosity average molecular weight $M_v$ is determined by calculation from the viscosity number determined according to ISO 1628, part 3 (version 2010) using Margolies' equation.

It is further preferred if the thermoplastic particles TP have an at least partly oxidized outer surface, that is preferably obtained by chemical oxidation in the presence of KOCl, H2O2 or NaOCl solution, or by plasma treatment or by oxyfluorination process.

Preferred thermoplastic particles **TP** are commercially available, for example surface modified polyolefin particles from Inhance include those in the family described as INHANCE® UH-1000 and HD-1000 series particles. Specific representatives of that family include those designated as UH-1045, UH-1080, UH-1200, UH-1250, UH-1500 and UH-1700.

Preferably, the amount of the amount of thermoplastic particles **TP** is between 2.5 - 30 wt.-%, preferably 5 - 22.5 wt.-% more preferably 7.5 - 15 wt.-%, based on the total weight of the thermosetting one-component epoxy resin composition. This is advantageous with respect to high impact peel values. This can be seen, for example, in table 4 in the comparison of E9 with E10 / E11, E12 with E13 / E14 and the comparison of E15 with E16/ E17 respectively. It can also be seen, for example, in table 6 in the comparison of E18 with E19 and E20 with E21 respectively.

The epoxy resin **A** having an average of more than one epoxy group per molecule is preferably a liquid epoxy resin or a solid epoxy resin. The term "solid epoxy resin" is very well known to a person skilled in the art of epoxies and is used in contrast to "liquid epoxy resins". The glass transition temperature of solid resins is above room temperature, meaning that they can be comminuted at room temperature to give free-flowing powders.

Preferred epoxy resins have the formula (II)

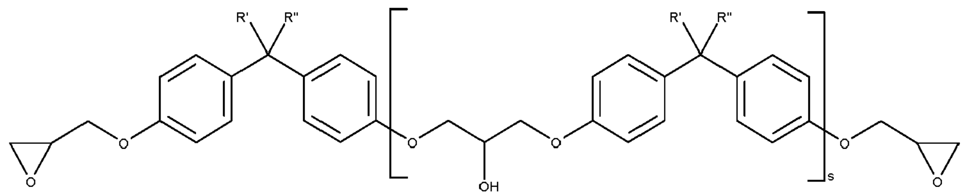

(II)

The substituents R' and R" here are independently either H or $CH_3$.

In solid epoxy resins, the index s has a value of > 1.5, especially of 2 to 12.

Such solid epoxy resins are commercially available, for example from Dow or Huntsman or Hexion.

Compounds of the formula (II) having an index s of 1 to 1.5 are referred to as semisolid epoxy resins by the person skilled in the art. For this present invention, they are likewise considered to be solid resins. However, preferred solid epoxy resins are epoxy resins in the narrower sense, i.e. where the index s has a value of > 1.5.

In liquid epoxy resins, the index s has a value of less than 1. Preferably, s has a value of less than 0.2.

Preference is thus given to diglycidyl ethers of bisphenol A (DGEBA), of bisphenol F, and of bisphenol A/F. Such liquid resins are available, for example, as Araldite® GY 250, Araldite® PY 304, Araldite® GY 282 (Huntsman) or D.E.R.™ 331 or D.E.R.™ 330 (Dow) or Epikote 828 (Hexion).

Further suitable epoxy resins **A** are what are called epoxy novolaks. More particularly, these are phenol or cresol epoxy novolaks.

Such epoxy resins are commercially available under the EPN or ECN and Tactix® trade names from Huntsman or from the D.E.N.™ product series from Dow Chemical.

The epoxy resin **A** is preferably an epoxy resin of the formula (II), especially a liquid epoxy resin of the formula (II).

In a particularly preferred embodiment, the thermosetting one-component epoxy resin composition contains both at least one liquid epoxy resin of the formula (II) with s < 1, especially less than 0.2, and at least one solid epoxy resin of the formula (II) with s > 1.5, especially from 2 to 12.

The proportion of the epoxy resin **A** is preferably 10-60% by weight, more preferably 30-60% by weight, most preferably 40-55% by weight, based on the total weight of the thermosetting one-component epoxy resin composition.

It is further advantageous when 50-100% by weight, especially 75-100% by weight, more preferably 75-95% by weight of the epoxy resin **A** is an aforementioned liquid epoxy resin.

It is further advantageous when 0-30% by weight, especially 0-25% by weight, more preferably 5-25% by weight, of the epoxy resin **A** is an aforementioned solid epoxy resin.

The composition of the invention also contains b) at least one latent curing agent **B** for epoxy resins. Latent curing agents are substantially inert at room temperature and are activated by elevated temperature, typically at temperatures of 70°C or more, thereby initiating the curing reaction. The customary latent curing agents for epoxy resins can be used. Preference is given to a latent curing agents **B** containing nitrogen.

Preferably, the latent curing agent **B** is selected from dicyandiamide, dihydrazides, guanamines, guanidines, anhydrides of polybasic carboxylic acids and aminoguanidines, more preferably, the latent curing agent **B** is selected from dicyandiamide and dihydrazides.

It can be especially preferred, if the latent curing agent **B** is selected from the group consisting of aromatic dicarboxylic dihydrazide **B1** and aliphatic dicarboxylic dihydrazide **B2**, preferably aliphatic dicarboxylic dihydrazide **B2.** This is advantageous with respect to high room temperature impact peel values at curing temperatures of 140 °C for 10 min. This can be seen, for example, in table 2 in the comparison of E1-E4 with E5-E8.

It can also be especially preferred, if the latent curing agent **B** is dicyandiamide **B3.** This is advantageous with respect to high room temperature impact peel values at curing temperatures of 195 °C for 30 min. This can be seen, for example, in table 2 in the comparison of E1-E4 with E5-E8.

In case the latent curing agent **B** is selected from the group consisting of aromatic dicarboxylic dihydrazide **B1** and aliphatic dicarboxylic dihydrazide **B2**, the amount of the latent curing agent **B** for epoxy resins is preferably 2 to 15 wt%, more preferably 6 to 14 wt%, more particularly 8-12 wt%, based on the total weight of the thermosetting one-component epoxy resin composition.

In case the latent curing agent **B** is dicyandiamide **B3**, the amount of the latent curing agent **B** for epoxy resins is preferably 0.5 to 12 wt%, more preferably 1 to 8 wt%, more particularly 2-6 wt%, based on the total weight of the thermosetting one-component epoxy resin composition.

Preferably, the thermosetting epoxy resin composition additionally contains at least one accelerator **C** for epoxy resins. Preferably, the accelerator **C** for epoxy resins is selected from the list consisting of substituted ureas, imidazoles, imidazolines and blocked amines, preferably substituted ureas, more preferably aliphatic substituted ureas.

In case the latent curing agent **B** is selected from the group consisting of aromatic dicarboxylic dihydrazide **B1** and aliphatic dicarboxylic dihydrazide **B2**, the fraction of the accelerator **C** for epoxy resins is preferably from 0.005 - 0.5 wt.-%, more preferably 0.01 - 0.2 wt.-%, most preferably 0.02 - 0.1 wt.-%, based on the total weight of the thermosetting epoxy resin composition.

In case the latent curing agent **B** is dicyandiamide **B3**, the fraction of the accelerator **C** for epoxy resins is preferably from 0.05 - 2 wt.-%, more preferably 0.1 - 1 wt.-%, most preferably 0.15 - 0.5 wt.-%, based on the total weight of the thermosetting epoxy resin composition.

The one-component thermosetting epoxy resin composition preferably comprises at least one toughness improver **D.** The toughness improvers **D** may be solid or liquid.

More particularly, the toughness improver **D** is selected from the group consisting of terminally blocked polyurethane polymers **D1**, liquid rubbers **D2** and core-shell polymers **D3.** The toughness improver **D** is preferably selected from the group consisting of terminally blocked polyurethane polymers **D1** and liquid rubbers **D2.** Particular preference is given to a terminally blocked polyurethane polymer **D1.**

If the toughness improver **D** is a terminally blocked polyurethane prepolymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used

stoichiometrically or in a stoichiometric excess in order to ensure that all NCO groups have been converted.

The polyurethane prepolymer with isocyanate end groups can be prepared from at least one diisocyanate or triisocyanate and from a polymer $\mathbf{Q_{PM}}$ having terminal amino, thiol or hydroxyl groups and/or from an optionally substituted polyphenol $\mathbf{Q_{PP}}$.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate ($H_{12}MDI$), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers $\mathbf{Q_{PM}}$ having terminal amino, thiol or hydroxyl groups are polymers $\mathbf{Q_{PM}}$ having two or three terminal amino, thiol or hydroxyl groups.

The polymers $\mathbf{Q_{PM}}$ advantageously have an equivalent weight of 300-6000, especially of 600-4000, preferably of 700-2200, g/equivalent of NCO-reactive groups.

Preferred polymers $\mathbf{Q_{PM}}$ are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers $\mathbf{Q_{PM}}$ are α□ω-dihydroxy polyalkylene glycols having $C_2$-$C_6$-alkylene groups or having mixed $C_2$-$C_6$-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols $\mathbf{Q_{PP}}$ are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer $\mathbf{Q_{PM}}$ having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer $\mathbf{Q_{PM}}$.

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox® CTBN and CTBNX and ETBN name from Emerald Performance Materials. Suitable derivatives are especially elastomer-modified prepolymers having epoxy groups, as sold commercially under the Polydis® product line, especially from the Polydis® 36.. product line, by Struktol® (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D**, in a third embodiment, may be a core-shell polymer **D3.** Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength™ trade name from Arkema, Paraloid™ from Dow or F-351™ from Zeon.

Preferably, the proportion of toughness improver **D**, especially of terminally blocked polyurethane polymer **D1**, is 10-30 % by weight, especially 15-25% by weight, based on the total weight of the thermosetting one-component epoxy resin composition.

It is further advantageous if he thermosetting one-component epoxy resin composition further at least one terminally blocked polyurethane polymer **D1** and if the sum of the thermoplastic particles **TP** and the terminally blocked polyurethane polymer **D1** (**TP** + **D1**) is 10 - 45 wt.-%, preferably 15 - 40 wt.-%, more preferably 17.5 - 35 wt.-%, based on the total weight of the thermosetting one-component epoxy resin composition. This is advantageous with respect to improved storage stability, for example the viscosity increase after 1 week storage at the elevated temperature of 50 °C. This can be seen, for example, in table 2 in the comparison of E1 and E2 with E3 and E4 or E5 and E6 with E7 and E8.

It is also preferable if in the thermosetting one-component epoxy resin composition the weight ratio of the terminally blocked polyurethane polymer **D1** to the thermoplastic particles **TP** (**D1 / TP**) is 0.4 - 15, preferably 0.5 - 7.5, more preferably 0.8 - 3. This is advantageous with respect to high impact peel values. This can be seen, for example, in table 4 in the comparison of E9-E11, E12-E14 and E15-E17. It is further shown in table 6 in the comparison of E18 with E19 and E20 with E21.

In a further preferred embodiment, the composition additionally comprises at least one filler **F.** Preference is given here to mica, talc, kaolin, wollastonite, feldspar, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide and fumed silicas.

Advantageously, the total proportion of the overall filler **F** is 5-30 % by weight, preferably 10-25 % by weight, more preferably 17.5-22.5 % by weight, based on the total weight of the thermosetting one-component epoxy resin composition.

In a further preferred embodiment, the composition additionally comprises at least one epoxy-bearing reactive diluent **G.** Such reactive diluents are known to the person skilled in the art. Preferred examples of epoxy-bearing reactive diluents are:

- glycidyl ethers of monofunctional, saturated or unsaturated, branched or unbranched, cyclic or open-chain, $C_4$-$C_{30}$ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of difunctional, saturated or unsaturated, branched or unbranched, cyclic or open-chain, $C_2$-$C_{30}$ alcohols, e.g. ethylene glycol glycidyl ether, butanediol glycidyl ether, hexanediol glycidyl ether, octanediol glycidyl ether, cyclohexanedimethanol diglycidyl ether, neopentyl glycol diglycidyl ether, and the like;
- glycidyl ethers of tri- or polyfunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;

- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Advantageously, the total proportion of the epoxy-bearing reactive diluent **G** is 0.1-15% by weight, preferably 0.1-5% by weight, especially preferably 0.1-2.5% by weight, based on the total weight of the thermosetting one-component epoxy resin composition.

The composition may include further constituents, especially catalysts, stabilizers, especially heat and/or light stabilizers, thixotropic agents, plasticizers, solvents, blowing agents, dyes and pigments, anticorrosives, surfactants, defoamers and adhesion promoters.

Suitable plasticizers are especially phenol alkylsulfonates or N-butylbenzamide, as commercially available as Mesamoll® or Dellatol BBS from Bayer.

Suitable stabilizers are especially optionally substituted phenols such as BHT or Wingstay® T (Elkem), sterically hindered amines or N-oxyl compounds such as TEMPO (Evonik).

A particularly preferred one-component epoxy resin composition comprises:

- 10-60% by weight, more preferably 30-60% by weight, most preferably 40-55% by weight, based on the total weight of the thermosetting one-component epoxy resin composition, of at least one epoxy resin **A** having an average of more

than one epoxy group per molecule;

- at least one latent curing agent **B** for epoxy resins, where the latent curing agent **B** is selected from the group consisting of aromatic dicarboxylic dihydrazide **B1**, aliphatic dicarboxylic dihydrazide **B2** and dicyandiamide **B3**, in case of **B1** or **B2**, the amount of the latent curing agent **B** for epoxy resins is 2 to 15 wt%, more preferably 6 to 14 wt%, more particularly 8-12 wt%, based on the total weight of the thermosetting one-component epoxy resin composition; in case of **B3**, the amount of the latent curing agent **B** for epoxy resins is 0.5 to 12 wt%, more preferably 1 to 8 wt%, more particularly 2-6 wt%, based on the total weight of the thermosetting one-component epoxy resin composition;
- preferably at least one accelerator **C** selected from the list consisting of substituted ureas, imidazoles, imidazolines and blocked amines, especially substituted ureas; preferably, in case the latent curing agent **B** is selected from the group consisting of aromatic dicarboxylic dihydrazide **B1** and aliphatic dicarboxylic dihydrazide **B2**, the fraction of the accelerator **C** for epoxy resins is preferably from 0.005 - 0.5 wt.-%, more preferably 0.01 - 0.2 wt.-%, most preferably 0.02 - 0.1 wt.-%, based on the total weight of the thermosetting epoxy resin composition; preferably, in case the latent curing agent **B** is dicyandiamide **B3**, the fraction of the accelerator **C** for epoxy resins is preferably from 0.05 - 2 wt.-%, more preferably 0.1 -1 wt.-%, most preferably 0.15 - 0.5 wt.-%, based on the total weight of the thermosetting epoxy resin composition;
- at least one toughness improver **D**, preferably at least one terminally blocked polyurethane polymer **D1**, preferably in an amount of 10-30% by weight, especially 15-25% by weight, based on the total weight of the thermosetting one-component epoxy resin composition;
- preferably 5-30 % by weight, preferably 10-25 % by weight, more preferably 17.5-22.5 % by weight, based on the total weight of the thermosetting one-component epoxy resin composition, of at least one filler **F**, preferably selected from the group consisting of calcium carbonate, calcium oxide and fumed silicas;
- preferably 0.1-15% by weight, preferably 0.1-5% by weight, especially preferably 0.1-2.5% by weight, based on the total weight of the thermosetting one-component epoxy resin composition, of an epoxy-bearing reactive diluent **G.**

Preferably, in the particularly preferred one-component epoxy resin composition the sum of the thermoplastic particles **TP** and the terminally blocked polyurethane polymer **D1** (TP + D1) is 10 - 45 wt.-%, preferably 15 - 40 wt.-%, more preferably 17.5 - 35 wt.-%, based on the total weight of the thermosetting one-component epoxy resin composition and / or, preferably and the weight ratio of the terminally blocked polyurethane polymer **D1** to the thermoplastic particles **TP** (**D1** / **TP**) is 0.4 - 15, preferably 0.5 - 7.5, more preferably 0.8-3.

It may further be advantageous when the preferred one-component epoxy resin composition consists of the aforementioned constituents to an extent of more than 80% by weight, preferably more than 90% by weight, especially more than 95% by weight, based on the total weight of the epoxy resin composition.

It is advantageous when the epoxy resin composition of the invention has a viscosity at 25°C of 1000-5500 Pa*s, especially 1000-5000 Pa*s, preferably 1000-3000 Pa*s, more preferably 1000-2750 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinccoated steel, and post-phosphated steel, and also aluminum, especially in the variants which typically occur in automobile construction.

Such a process for the bonding of heat-stable substrates preferably comprises the stages:

i) applying a thermosetting one-component epoxy resin composition as described in detail above to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 100-220°C, especially of 120-200°C, preferably between 130 and 150°C, more preferably between 130 and 140°C.

The substrate **S2** consists here of the same material as or a different material from the substrate **S1**. The substrates **S1** and/or **S2** are in particular the aforementioned metals and plastics.

Preferably, in step iii), the composition is heated to a temperature of 100-220°C, especially of 120-200°C, preferably between 130 and 150°C, more preferably between 130 and 140°C, and the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a vehicle or part of a vehicle. Hence such an adhesive-bonded article can be obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of the above-described composition are preferably used at temperatures between typically 120°C and -40°C, preferably between 100°C and -40°C, in particular between 80°C and -40°C.

A particularly preferred use of the thermosetting one-component epoxy resin composition is the use thereof as a thermosetting one-component bodywork adhesive in motor vehicle construction or as a stiffening compound or as a foamable, thermosetting composition for the reinforcement of voids in structural components and reinforcing elements.

Another aspect of the present invention is the use of the above-mentioned thermoplastic particles **TP** to improve the impact peel strength at 23 °C of a thermosetting one-component epoxy resin composition after curing for 40 min at 180°C, wherein the impact peel strength is measured as described in the experimental section. The improvement of the impact peel strength is compared to said thermosetting one-component epoxy resin compositions not having said thermoplastic particles **TP** and wherein the thermosetting one-component epoxy resin composition comprises:

a) at least one epoxy resin **A** having an average of more than one epoxy group per molecule, preferably 10 - 60 % by weight, more preferably 30 - 60 % by weight, most preferably 40 - 45 % by weight %, based on the total weight of the thermosetting one-component epoxy resin composition;
b) at least one latent curing agent **B** for epoxy resins, preferably the latent curing agent **B** is selected from the group consisting of aromatic dicarboxylic dihydrazide **B1**, aliphatic dicarboxylic dihydrazide **B2** and dicyandiamide **B3**;
c) preferably at least one toughness improver **D**, preferably at least one terminally blocked polyurethane polymer **D1.**

Preferably, the improvement of impact peel strength at 23 °C is more than 10 %, more preferably more than 20 %, most preferably more than 30 %, compared to the thermosetting one-component epoxy resin compositions not containing thermoplastic particles **TP.**

Preferably, the thermosetting one-component epoxy resin composition have the following properties:

**Tensile Strength**, measured as described in the experimental section, of ≥ 25 MPa, especially ≥ 30 MPa, especially ≥ 32.5 MPa;
**Modulus of elasticity**, measured as described in the experimental section, of ≥ 1500 MPa, especially ≥ 1750 MPa, more preferably ≥ 2000 MPa, most preferably ≥ 2200 MPa;
**Impact peel at 23 °C after curing for 20 min @ 150°C (LB),** measured as described in the experimental section, of ≥ 10 N/mm, especially ≥ 20 N/mm, more preferably ≥ 25 N/mm, most preferably ≥ 30 N/mm.
**Impact peel at 23 °C after curing for 40 min @ 180°C (NB),** measured as described in the experimental section, of ≥ 10 N/mm, especially ≥ 20 N/mm, more preferably ≥ 25 N/mm, most preferably ≥ 30 N/mm.

## Examples

Some examples which further illustrate the invention, but which are not intended to restrict the scope of the invention in any way, are cited below.

<u>Preparation of a toughness improver ("***D1***")</u>

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D1.***

| | |
|---|---|
| A1 | Liquid aromatic epoxy resin, D.E.R. 331 (bisphenol A diglycidyl ether), DOW |
| A2 | Solid epoxy resin (bisphenol A diglycidyl ether-based), Dow |
| G | Tert-Butylphenyl-glycidylether, Polypox R7, epoxy-bearing reactive diluent |
| B2 | Adipic dihydrazide (ADH), CAS: 1071-93-8, Technicure ADH-J (median particle size $D_{50}$ of 2.4 μm), A&C Catalysts Inc., Mw: 174.20 g/mol |
| B3 | Dicyandiamide, Dyhard 100SF, AlzChem |
| C | N,N-dimethylurea, Mw: 88.11 g/mol, Sigma Aldrich |
| F1 | Calcium carbonate |
| F2 | Pyrogenic silica |
| F3 | Calcium oxide |
| Pigment | Carbon black |
| CPP | Corrosion protection particles (aluminum phosphate) |
| P1 | UHMW-PE surface modified particles, Inhance UH 1045, particle size D50 = 230 μm, polar component of surface free energy: 6.1 [mN/m], disperse component of surface free energy: 19.5 [mN/m], percentage of the polar component of the surface free energy: 24.0 %, viscosity average molecular weight $M_v$: 3-7million g/mol, Inhance Technologies |
| P2 | UHMW-PE surface modified particles, Inhance UH 1250, particle size D50 = 58 μm, surface free energy (polar): 5.0 [mN/m], disperse component of surface free energy: 20.3 [mN/m], percentage of the polar component of the surface free energy: 19.9 %, viscosity average molecular weight $M_v$: 3-7million g/mol, Inhance Technologies |
| P3 | UHMW-PE surface modified particles, Inhance UH 1700, particle size D50 = 37 μm, surface free energy (polar): 3.4 [mN/m], disperse component of surface free energy: 26.3 [mN/m], percentage of the polar component of the surface free energy: 11.3 %, viscosity average molecular weight $M_v$: 3-7million g/mol, Inhance Technologies |
| P4 | UHMW-PE non-surface modified particles, GUR-4050-3, particle size D50 = 58 μm, surface free energy (polar): 0 [mN/m], disperse component of surface free energy: 28.0 [mN/m], percentage of the polar component of the surface free energy: 0 %, viscosity average molecular weight $M_v$: 7.3 million g/mol, Celanese |
| | Poly-THF 2000 (difunctional polybutylene glycol)<br>(OH equivalent weight = about 1000 g/OH equivalent), BASF |
| | PolyBD R45V (hydroxyl-terminated polybutadiene)<br>(OH equivalent weight = about 1230 g/OH equivalent), Cray Valley |
| | Isophorone diisocyanate (= "*IPDI*"), Evonik |
| Raw materials used. | |

Production of the compositions

The reference compositions Ref.1 to Ref.6 and the inventive compositions E1 to E21 were produced according to the compositions in table 1, wherein the stated amounts are in parts by weight.

**Test methods:**

Tensile strength (TS), elongation at break (EB) and modulus of elasticity (E-modulus) (DIN EN ISO 527)

An adhesive sample was pressed between two Teflon papers to a layer thickness of 2 mm. After curing at 180°C for 30 min, the Teflon papers were removed, and the specimens were die-cut to the DIN standard state. The test specimens were examined under standard climatic conditions at a strain rate of 2 mm/min. Tensile strength (TS), elongation at break and the 0.05-0.25% modulus of elasticity were measured to DIN EN ISO 527 at a temperature of 23°C.

Impact peel strength (IP) (ISO 11343)

The specimens were produced with the adhesive and DC04+ZE steel with dimensions of 90 x 20 x 0.8 mm. The bonding area here was 20 x 30 mm at a layer thickness of 0.3 mm with glass beads as spacer. The samples were either cured for 20 minutes at oven temperature 150°C (LB) or for 40 minutes at oven temperature 180°C (NB). Impact peel strength was measured at 23°C (RT) or at -30°C (-30°C), as a triple determination on a Zwick 450 impact pendulum. The impact peel strength reported is the average force in N/mm under the measurement curve from 25% to 90% to ISO11343.

Determination particle size ($D_{50}$) and surface free energy parameters:

The average particle size $D_{50}$ was determined by laser diffractometry using a Sympatec HELOS machine and dry dispersion in air stream (RODOS). The surface free energy and the polar component as well as the disperse component thereof were determined with the Washburn method as described above in the specification.

Viscosity (Viscosity @ 25°C)

Viscosity measurements of the adhesives were effected 1 d after production on an Anton Paar MCR 101 rheometer by oscillation using a plate-plate geometry at a temperature of 25°C with the following parameters: 5 Hz, measurement gap 1 mm, plate-plate diameter 25 mm, 1% deformation.

Viscosity/storage stability of compositions (Viscosity after 7d/60°C @ 25°C and Increase)

For assessment of the storage stability of the adhesives, the viscosity measurement @ 25°C was repeated after storage at the specified temperature for 7 days at 60°C ("Viscosity after 7d/60°C") and the percentage rise in viscosity that results after the storage compared to the value without storage ("Viscosity @ 25°C") was ascertained ("Increase").

| Composition | Ref.1 | E1 | E2 | Ref.2 | E3 | E4 | Ref.3 | E5 | E6 | Ref.4 | E7 | E8 |
|---|---|---|---|---|---|---|---|---|---|---|---|---|
| | | | | | | | | | | | | |
| | | | | | | | | | | | | |
| A1 | 41 | 41 | 41 | 41 | 41 | 41 | 43.5 | 43.5 | 43.5 | 43.5 | 43.5 | 43.5 |
| G | 1 | 1 | 1 | 1 | 1 | 1 | 1 | 1 | 1 | 1 | 1 | 1 |
| A2 | 3 | 3 | 3 | 3 | 3 | 3 | 3 | 3 | 3 | 3 | 3 | 3 |
| B2 | 10.18 | 10.18 | 10.18 | 10.18 | 10.18 | 10.18 | | | | | | |
| B3 | | | | | | | 3.8 | 3.8 | 3.8 | 3.8 | 3.8 | 3.8 |
| C | 0.02 | 0.02 | 0.02 | 0.02 | 0.02 | 0.02 | 0.2 | 0.2 | 0.2 | 0.2 | 0.2 | 0.2 |
| D1 | 20 | | | | 10 | 10 | 20 | | | | 10 | 10 |
| P1 | | 20 | | | 10 | | | 20 | | | 10 | |
| P3 | | | 20 | | | 10 | | | 20 | | | 10 |
| P4 | | | | 20 | | | | | | 20 | | |
| F1 | 11.75 | 11.75 | 11.75 | 11.75 | 11.75 | 11.75 | 14.45 | 14.45 | 14.45 | 14.45 | 14.45 | 14.45 |
| F2 | 5 | 5 | 5 | 5.4 | 5 | 5 | 5.4 | 5.4 | 5.4 | 5.4 | 5.4 | 5.4 |
| F3 | 5 | 5 | 5 | 5.4 | 5 | 5 | 5.4 | 5.4 | 5.4 | 5.4 | 5.4 | 5.4 |
| Pigment | 0.05 | 0.05 | 0.05 | 0.05 | 0.05 | 0.05 | 0.05 | 0.05 | 0.05 | 0.05 | 0.05 | 0.05 |
| CPP | 3 | 3 | 3 | 3.2 | 3 | 3 | 3.2 | 3.2 | 3.2 | 3.2 | 3.2 | 3.2 |
| Total | **100.0** | **100.0** | **100.0** | **100.0** | **100.0** | **100.0** | **100.0** | **100.0** | **100.0** | **100.0** | **100.0** | **100.0** |

Table 1, n.d. = not determined

Table 2, n.d. = not determined

| Composition | Ref.1 | E1 | E2 | Ref.2 | E3 | E4 | Ref.3 | E5 | E6 | Ref.4 | E7 | E8 |
|---|---|---|---|---|---|---|---|---|---|---|---|---|
| E-Modulus [MPa] | 1450 | 2550 | 2750 | 2360 | 1940 | 2010 | 1380 | 2540 | 2770 | 2180 | 1920 | 1780 |
| TS [MPa] | 27.9 | 33.3 | 46.7 | 34.8 | 32.6 | 37 | 27.6 | 38.7 | 38.3 | 35.3 | 33 | 31.7 |
| EB [MPa] | 6 | 5 | 3 | 2 | 4 | 5 | 11 | 4 | 2 | 3 | 5 | 6 |
| IP LB RT [N/mm] | 23.9 | 27.3 | 13.2 | 3.8 | 26.5 | 13 | 2.7 | 22.1 | 10.8 | 3.5 | 14.1 | 21.6 |
| IP LB -30°C [N/mm] | 11.3 | 17.8 | n.d. | n.d. | 19 | n.d. | n.d. | n.d. | n.d. | n.d. | n.d. | n.d. |
| IP NB RT [N/mm] | 18.2 | 26 | 14.2 | 4.9 | 26 | 17.5 | 40.3 | 31.2 | 19.2 | 3.8 | 35.1 | 29.4 |
| Visco 25°C, Initial [Pa*s] | 939 | 3830 | 3690 | n.d. | 1530 | 1410 | 748 | 4690 | 3660 | n.d. | 1210 | 1120 |
| Visco 25°C, 1W 50°C storage [Pa*s] | 1110 | 5970 | >10000 | n.d. | 1800 | 1480 | 831 | 4190 | 4050 | n.d. | 1410 | 1270 |

| Composition | Ref.5 | E9 | E10 | E11 | E12 | E13 | E14 | E15 | E16 | E17 |
|---|---|---|---|---|---|---|---|---|---|---|
| A1 | 43.5 | 43.5 | 43.5 | 43.5 | 43.5 | 43.5 | 43.5 | 43.5 | 43.5 | 43.5 |
| G | 1 | 1 | 1 | 1 | 1 | 1 | 1 | 1 | 1 | 1 |
| A2 | 6 | 6 | 6 | 6 | 6 | 6 | 6 | 6 | 6 | 6 |
| B3 | 4.1 | 4.1 | 4.1 | 4.1 | 4.1 | 4.1 | 4.1 | 4.1 | 4.1 | 4.1 |
| C | 0.4 | 0.4 | 0.4 | 0.4 | 0.4 | 0.4 | 0.4 | 0.4 | 0.4 | 0.4 |
| D1 | 17.5 | 17.5 | 17.5 | 17.5 | 17.5 | 17.5 | 17.5 | 17.5 | 17.5 | 17.5 |
| P1 | | 1 | 5 | 8 | | | | | | |
| P2 | | | | | 1 | 5 | 8 | | | |
| P3 | | | | | | | | 1 | 5 | 8 |
| F1 | 10.9 | 9.9 | 5.9 | 2.9 | 9.9 | 5.9 | 2.9 | 9.9 | 5.9 | 2.9 |
| F2 | 6.5 | 6.5 | 6.5 | 6.5 | 6.5 | 6.5 | 6.5 | 6.5 | 6.5 | 6.5 |
| F3 | 7.0 | 7.0 | 7.0 | 7.0 | 7.0 | 7.0 | 7.0 | 7.0 | 7.0 | 7.0 |
| Pigment | 0.1 | 0.1 | 0.1 | 0.1 | 0.1 | 0.1 | 0.1 | 0.1 | 0.1 | 0.1 |
| CPP | 3 | 3 | 3 | 3 | 3 | 3 | 3 | 3 | 3 | 3 |
| Total | 100.0 | 100.0 | 100.0 | 100.0 | 100.0 | 100.0 | 100.0 | 100.0 | 100.0 | 100.0 |

Table 3, n.d. = not determined

Table 4, n.d. = not determined

| Composition | Ref.5 | E9 | E10 | E11 | E12 | E13 | E14 | E15 | E16 | E17 |
|---|---|---|---|---|---|---|---|---|---|---|
| IP NB RT [N/mm] | 28.7 | 34.2 | 38.4 | 40.0 | 35.4 | n.d. | 36.3 | 32.4 | 34.1 | 34.9 |
| IP NB -30°C [N/mm] | 12.5 | 18.7 | 24.6 | 28.5 | 16 | 25.1 | 25.7 | n.d. | 22.5 | 24 |

| Composition | Ref.6 | E18 | E19 | E20 | E21 |
|---|---|---|---|---|---|
| A1 | 44.5 | 44.5 | 44.5 | 44.5 | 44.5 |
| G | 0.5 | 0.5 | 0.5 | 0.5 | 0.5 |
| A2 | 3 | 3 | 3 | 3 | 3 |
| B2 | 10.5 | 10.5 | 10.5 | 10.5 | 10.5 |
| C | 0.1 | 0.1 | 0.1 | 0.1 | 0.1 |
| D1 | 22.5 | 22.5 | 22.5 | 22.5 | 22.5 |
| P1 | | 5 | 10 | | |
| P2 | | | | 5 | 10 |
| F1 | 5 | | | | |
| F2 | 5.8 | 5.8 | 5.8 | 5.8 | 5.8 |
| F3 | 5 | 5 | | 5 | |
| Pigment | 0.1 | 0.1 | 0.1 | 0.1 | 0.1 |
| CPP | 3 | 3 | 3 | 3 | 3 |
| Total | **100.0** | **100.0** | **100.0** | **100.0** | **100.0** |

Table 5, n.d. = not determined

Table 6, n.d. = not determined

| Composition | Ref.6 | E18 | E19 | E20 | E21 |
|---|---|---|---|---|---|
| IP LB RT [N/mm] | 33.99 | 33.19 | 38.42 | 35.49 | 34.46 |
| IP NB RT [N/mm] | 27.03 | 29.46 | 31.97 | 28.21 | 30.9 |
| Visco 25°C Initial [Pa*s] | 1595 | 2110 | 2250 | 1870 | 2150 |
| Visco 25°C, 1W 50°C storage [Pa*s] | 1840 | 2260 | 2490 | 2100 | 2660 |
| Visco increase [%] | 15 | 7 | 11 | 12 | 24 |

## Claims

**1.** A thermosetting one-component epoxy resin composition comprising:

a) at least one epoxy resin **A** having an average of more than one epoxy group per molecule, preferably 10 - 60 % by weight, more preferably 30 - 60 % by weight, most preferably 40 - 45 % by weight %, based on the total weight of the thermosetting one-component epoxy resin composition;
b) at least one latent curing agent **B** for epoxy resins, preferably the latent curing agent **B** is selected from the group consisting of aromatic dicarboxylic dihydrazide **B1**, aliphatic dicarboxylic dihydrazide **B2** and dicyandiamide **B3**;
c) preferably at least one toughness improver **D**, preferably at least one terminally blocked polyurethane polymer **D1**; and
d) thermoplastic particles **TP** with an average particle size $D_{50}$ between 5 - 400 μm, preferably between 7.5 - 150 μm, more preferably between 10 - 100 μm, determined by laser diffractometry, more preferably by using a Sympatec HELOS machine and dry dispersion in air stream (RODOS), and a polar component of the surface free energy of more than 2 mN/m determined with the Washburn method as described in the specification.

**2.** The thermosetting one-component epoxy resin composition according to claim 1, wherein the amount of the amount of thermoplastic particles **TP** is between 2.5 - 30 wt.-%, preferably 5 - 22.5 wt.-% more preferably 7.5 - 15 wt.-%, based on the total weight of the thermosetting one-component epoxy resin composition.

**3.** The thermosetting one-component epoxy resin composition according to any of the proceeding claims, **character-**

**ized in that** the thermoplastic particles **TP** have a polar component of the surface free energy of more than 3 mN/m, preferably more than 4.5 mN/m, most preferably more than 5.5 mN/m, determined with the Washburn method as described in the specification.

**4.** The thermosetting one-component epoxy resin composition according to any of the proceeding claims, **characterized in that** the thermoplastic particles **TP**, the polar component of the surface free energy amounts to more than 10 %, preferably more than 15 %, preferably more than 22.5 %, of the total surface free energy, wherein the total surface free energy is the sum of the polar component and the disperse component of the surface free energy and wherein the surface free energy is determined with the Washburn method as described in the specification.

**5.** The thermosetting one-component epoxy resin composition according to any of the proceeding claims, **characterized in that** the thermoplastic particles **TP** are polyolefin particles, preferably polyethylene particles.

**6.** The thermosetting one-component epoxy resin composition according to claim 5, **characterized in that** the thermoplastic particles **TP** are UHMWPE (ultra high molecular weight polyethylene) particles, preferably having an viscosity average molecular weight $M_v$ ranging from 1 to 11 million g/mol, more preferably 3 to 10.5 million g/mol, yet more preferably from 3 to 7 million g/mol, wherein the viscosity average molecular weight $M_v$ is determined by calculation from the viscosity number determined according to ISO 1628, part 3 (version 2010) using Margolies' equation.

**7.** The thermosetting one-component epoxy resin composition according to any of the proceeding claims, **characterized in that** the thermosetting one-component epoxy resin composition further comprises at least one terminally blocked polyurethane polymer **D1**, preferably the sum of the thermoplastic particles **TP** and the terminally blocked polyurethane polymer **D1 (TP+D1)** is 10 - 45 wt.-%, preferably 15 - 40 wt.-%, more preferably 17.5 - 35 wt.-%, based on the total weight of the thermosetting one-component epoxy resin composition.

**8.** The thermosetting one-component epoxy resin composition according to claim 7, **characterized in that** the weight ratio of the terminally blocked polyurethane polymer **D1** to the thermoplastic particles **TP (D1/TP)** is 0.4 - 15, preferably 0.5 - 7.5, more preferably 0.8 - 3.

**9.** The thermosetting one-component epoxy resin composition according to any of the proceeding claims, **characterized in that** the latent curing agent **B** is selected from the group consisting of aromatic dicarboxylic dihydrazide **B1** and aliphatic dicarboxylic dihydrazide **B2**, preferably aliphatic dicarboxylic dihydrazide **B2**, preferably the amount of the latent curing agent **B** for epoxy resins is 2 to 15 wt%, more preferably 6 to 14 wt%, more particularly 8-12 wt%, based on the total weight of the thermosetting one-component epoxy resin composition.

**10.** The thermosetting one-component epoxy resin composition according to any of the proceeding claims 1 - 8, **characterized in that** the latent curing agent **B** is dicyandiamide **B3**, preferably the amount of the latent curing agent **B** for epoxy resins is 0.5 to 12 wt%, more preferably 1 to 8 wt%, more particularly 2-6 wt%, based on the total weight of the thermosetting one-component epoxy resin composition.

**11.** The thermosetting one-component epoxy resin composition according to any of the proceeding claims, **characterized in that** the thermosetting one-component epoxy resin composition additionally includes at least one accelerator **C** for epoxy resins selected from the list consisting of substituted ureas, imidazoles, imidazolines and blocked amines, preferably substituted ureas, more preferably aliphatic substituted ureas; in case the latent curing agent **B** is selected from the group consisting of aromatic dicarboxylic dihydrazide **B1** and aliphatic dicarboxylic dihydrazide **B2**, the fraction of the accelerator **C** for epoxy resins is preferably from 0.005 - 0.5 wt.-%, more preferably 0.01 - 0.2 wt.-%, most preferably 0.02 - 0.1 wt.-%, based on the total weight of the thermosetting epoxy resin composition; in case the latent curing agent **B** is dicyandiamide **B3**, the fraction of the accelerator **C** for epoxy resins is preferably from 0.05 - 2 wt.-%, more preferably 0.1 - 1 wt.-%, most preferably 0.15 - 0.5 wt.-%, based on the total weight of the thermosetting epoxy resin composition.

**12.** The thermosetting one-component epoxy resin composition according to any of the proceeding claims, **characterized in that** the proportion of toughness improver **D**, especially of terminally blocked polyurethane polymer **D1**, is 10-30 % by weight, especially 15-25% by weight, based on the total weight of the thermosetting one-component epoxy resin composition.

**13.** The thermosetting one-component epoxy resin composition according to any of the proceeding claims, **character-**

**ized in that** the thermosetting one-component epoxy resin composition additionally includes 5-30 % by weight, preferably 10-25 % by weight, more preferably 17.5-22.5 % by weight, based on the total weight of the thermosetting one-component epoxy resin composition, of at least one filler **F**, preferably selected from the group consisting of calcium carbonate, calcium oxide and fumed silicas.

**14.** The thermosetting one-component epoxy resin composition according to any of the proceeding claims, **characterized in that** the thermosetting one-component epoxy resin composition has a viscosity at 25°C of 1000-5500 Pa*s, especially 1000-5000 Pa*s, preferably 1000-3000 Pa*s, more preferably 1000-2750 Pa*s, especially measured with a rheometer in oscillation using a plate-plate geometry with the following parameters: 5 Hz, measurement gap 1 mm, plate-plate diameter 25 mm, 1% deformation.

**15.** A process for the adhesive bonding of heat-stable substrates, comprising the stages of:

i) applying a thermosetting one-component epoxy resin composition as claimed in any of claims 1 to 14 to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 100-220°C, especially of 120-200°C, preferably between 130 and 150°C, more preferably between 130 and 140°C;

in which the substrate **S2** consists of the same material as or a different material from the substrate **S1**; being preferred that in step iii) of heating the composition to a temperature of 100-220°C, especially of 120-200°C, preferably between 130 and 150°C, more preferably between 130 and 140°C, the composition is left at the aforementioned temperature for 10 min - 6 h, 10 min - 2 h, 10 min - 60 min, 10 min - 30 min, 10 min - 20 min, more preferably 10 min - 15 min.

**16.** The use of thermoplastic particles **TP** with an average particle size $D_{50}$ between 5 - 400 μm, preferably between 7.5 - 150 μm, more preferably between 10 - 100 μm, determined by laser diffractometry, more preferably by using a Sympatec HELOS machine and dry dispersion in air stream (RODOS), and a polar component of the surface free energy of more than 2 mN/m determined with the Washburn method as described in the specification, to improve the impact peel strength at 23 °C of a thermosetting one-component epoxy resin composition after curing for 40 min at 180°C, wherein the impact peel strength is measured as described in the experimental section, wherein the improvement of the impact peel strength is compared to said thermosetting one-component epoxy resin compositions not having said thermoplastic particles **TP** and wherein the thermosetting one-component epoxy resin composition comprises:

a) at least one epoxy resin **A** having an average of more than one epoxy group per molecule, preferably 10 - 60 % by weight, more preferably 30 - 60 % by weight, most preferably 40 - 45 % by weight %, based on the total weight of the thermosetting one-component epoxy resin composition;
b) at least one latent curing agent **B** for epoxy resins, preferably the latent curing agent **B** is selected from the group consisting of aromatic dicarboxylic dihydrazide **B1**, aliphatic dicarboxylic dihydrazide **B2** and dicyandiamide **B3**;
c) preferably at least one toughness improver **D**, preferably at least one terminally blocked polyurethane polymer **D1**;

preferably, the improvement of impact peel strength at 23 °C is more than 10 %, more preferably more than 20 %, most preferably more than 30 %, compared to the thermosetting one-component epoxy resin compositions not containing thermoplastic particles **TP.**

Europäisches Patentamt
European Patent Office
Office européen des brevets

# EUROPEAN SEARCH REPORT

Application Number
EP 24 17 0328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2017/066928 A1 (CAMPS MARIA BILURBINA [ES] ET AL) 9 March 2017 (2017-03-09)<br>* example 8; table 1 *<br>----- | 1-15<br>1-15 | INV.<br>C08L63/00<br>C09J163/00 |
| Y | US 11 891 507 B2 (SIKA TECH AG [CH]) 6 February 2024 (2024-02-06)<br>* the whole document *<br>----- | 1-16 | |
| Y | US 2020/239618 A1 (BARNES RORY R [IE] ET AL) 30 July 2020 (2020-07-30)<br>* paragraphs [0001], [0008] - [0019], [0026], [0108] - [0110] *<br>----- | 16 | |

TECHNICAL FIELDS SEARCHED (IPC)

C08L
C09J

The present search report has been drawn up for all claims

| Place of search | Date of completion of the search | Examiner |
|---|---|---|
| The Hague | 22 August 2024 | Bezard, Stéphane |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 0328

This annex lists the patent family members relating to the patent documents cited in the above-mentioned European search report. The members are as contained in the European Patent Office EDP file on
The European Patent Office is in no way liable for these particulars which are merely given for the purpose of information.

22-08-2024

| Patent document cited in search report | Publication date | Patent family member(s) | Publication date |
|---|---|---|---|
| US 2017066928 A1 | 09-03-2017 | CA 2939788 A1 | 11-09-2015 |
| | | CN 106068310 A | 02-11-2016 |
| | | CN 114574023 A | 03-06-2022 |
| | | CN 114621618 A | 14-06-2022 |
| | | EP 3114176 A1 | 11-01-2017 |
| | | KR 20160142837 A | 13-12-2016 |
| | | MY 195088 A | 10-01-2023 |
| | | RU 2016138829 A | 06-04-2018 |
| | | SA 516371784 B1 | 01-09-2022 |
| | | SA 522432701 B1 | 17-12-2023 |
| | | SG 11201607327S A | 28-10-2016 |
| | | US 2017066928 A1 | 09-03-2017 |
| | | WO 2015132366 A1 | 11-09-2015 |
| US 11891507 B2 | 06-02-2024 | BR 112021007419 A2 | 03-08-2021 |
| | | CN 113166375 A | 23-07-2021 |
| | | EP 3677611 A1 | 08-07-2020 |
| | | EP 3906271 A1 | 10-11-2021 |
| | | JP 2022515712 A | 22-02-2022 |
| | | KR 20210110789 A | 09-09-2021 |
| | | US 2021355316 A1 | 18-11-2021 |
| | | WO 2020141130 A1 | 09-07-2020 |
| US 2020239618 A1 | 30-07-2020 | CN 111433244 A | 17-07-2020 |
| | | EP 3692084 A1 | 12-08-2020 |
| | | ES 2883937 T3 | 09-12-2021 |
| | | GB 2567219 A | 10-04-2019 |
| | | JP 7337050 B2 | 01-09-2023 |
| | | JP 2020536156 A | 10-12-2020 |
| | | US 2020239618 A1 | 30-07-2020 |
| | | WO 2019068690 A1 | 11-04-2019 |

EPO FORM P0459

For more details about this annex : see Official Journal of the European Patent Office, No. 12/82